# FASCICULE DE BREVET EUROPEEN

(11) **EP 1 277 645 B1**
(45) Date de publication et mention de la délivrance du brevet: **06.10.2004**
(21) Numéro de dépôt: 02356132.7
(22) Date de dépôt: 08.07.2002
(51) Int. Cl.: B62D 3/12, B62D 5/22

(54) **Direction à crémaillère pour véhicule automobile**
Zahnstangenlenkung für ein Kraftfahrzeug
Rack-and-pinion steering gear for a motor vehicle

(30) Priorité: 18.07.2001 FR 0109619
(43) Date de publication de la demande: 22.01.2003
(73) Titulaire: Société de Mécanique d'Irigny, 69540 Irigny (FR)
(72) Inventeur: Pantale, David, 69126 Brindas (FR)
(74) Mandataire: Bratel, Gérard

(56) Documents cités:
- FR-A- 2 747 635
- GB-A- 1 001 985
- US-A- 3 927 576

## Description

La présente invention concerne, de façon générale, les systèmes de direction pour véhicules automobiles. Elle se rapporte, plus particulièrement, aux directions mécaniques à crémaillère, pourvues d'un dispositif dit « ligne poussoir » qui assure un contact permanent de la crémaillère avec le pignon de direction, en compensant les jeux. Encore plus spécialement, l'invention s'intéresse à un dispositif qui, pour ce genre de direction, assure un équilibrage entre les pressions d'air à l'intérieur de la direction et l'extérieur de celle-ci.

Une direction à crémaillère de véhicule automobile est habituellement réalisée de façon totalement étanche, afin d'éviter toute entrée indésirable d'eau ou d'humidité à l'intérieur de la direction. Ceci pose toutefois des problèmes de surpression ou de dépression dans la direction, en fonction de l'augmentation ou de la baisse de la température environnante, la surpression ou dépression entraînant une déformation exagérée des soufflets de la direction, avec pour conséquence une détérioration ou une destruction de ces soufflets.

Certes, il a été déjà envisagé de réaliser des directions avec des soufflets « respirants », qui permettent l'entrée ou la sortie d'air - voir par exemple le document US 3927576 A. Toutefois, cette solution nécessite une fabrication spéciale, donc complexe et coûteuse, des soufflets.

Par ailleurs, la « ligne poussoir » d'une direction à crémaillère comporte, dans un mode de réalisation assez courant :
- un poussoir proprement dit, de forme adaptée au contact avec la crémaillère, qui est guidé dans une partie tubulaire solidaire du carter de direction ;
- des moyens à ressort, sous la forme d'un ressort à spires et/ou de rondelles-ressorts, qui transmettent un effort axial au poussoir, directement ou par l'intermédiaire d'une rondelle d'appui,
- un élément vissable dans la partie tubulaire solidaire du carter, ou un élément autrement réglable en position dans cette partie tubulaire (par exemple bloqué en position par un anneau élastique, ou par tout autre moyen de retenue), ledit élément assurant la compression des moyens à ressort, tout en permettant le réglage du dispositif, cet élément vissable ou réglable possédant un trou central traversant utilisé dans le processus de montage de la direction ;
- un bouchon finalement mis en place dans le trou central de l'élément vissable ou réglable, pour obturer entièrement le dispositif, en le rendant étanche.

Voir par exemple le document GB 1001985 A avec un bouchon du type défini dans le préambule de la revendication 1.

La présente invention a pour but de fournir une direction à crémaillère avec un dispositif simple et économique d'équilibrage des pressions entre l'intérieur et l'extérieur de la direction, en vue d'éviter la déformation et la détérioration des soufflets, ce dispositif mettant à profit la structure de la « ligne poussoir » qui vient d'être rappelée.

A cet effet, l'invention a pour objet une direction à crémaillère pour véhicule automobile, pourvue d'une « ligne poussoir » assurant un contact permanent de la crémaillère avec le pignon de direction, la « ligne poussoir » comprenant, montés dans une partie tubulaire solidaire du carter de direction, un poussoir proprement dit venant en contact avec le dos de la crémaillère, un élément vissable ou réglable en position monté derrière le poussoir, et des moyens à ressort interposés entre le poussoir et l'élément vissable ou réglable, cet élément vissable ou réglable possédant un trou central traversant recevant un bouchon, cette direction à crémaillère étant caractérisée par le fait que ledit bouchon est réalisé, au moins partiellement, en une matière perméable à l'air mais hydrophobe, pour permettre l'équilibrage des pressions entre l'intérieur et l'extérieur de la direction, et pour éviter ainsi la déformation des soufflets de cette direction.

Ainsi, le principe de l'invention consiste, tout simplement, à remplacer un bouchon existant, habituellement étanche à l'eau et à l'air, par un bouchon de même dimension, s'adaptant dans le même trou préexistant de l'élément vissable ou réglable de la « ligne poussoir », mais réalisé au moins partiellement en une matière perméable à l'air et hydrophobe, ce qui assure l'équilibrage permanent des pressions d'air entre l'intérieur et l'extérieur de la direction (en utilisant aussi la communication habituellement existante entre les deux soufflets de la direction). La solution proposée par l'invention est donc particulièrement simple et économique.

Selon une première forme de réalisation de l'invention, le bouchon, reçu dans le trou central traversant de l'élément vissable ou réglable de la « ligne poussoir », est réalisé entièrement en une matière perméable à l'air mais hydrophobe.

Selon une deuxième forme de réalisation de l'invention, le bouchon, reçu dans le trou central traversant de l'élément vissable ou réglable de la « ligne poussoir », possède un corps tubulaire en matière étanche à l'eau et à l'air, le corps tubulaire de ce bouchon recevant un insert central traversant en matière perméable à l'air mais hydrophobe.

Selon une troisième forme de réalisation de l'invention, le bouchon, reçu dans le trou central traversant de l'élément vissable ou réglable de la « ligne poussoir », possède un corps tubulaire en matière étanche à l'eau et à l'air, le corps tubulaire de ce bouchon recevant, dans son passage central, une membrane transversale en matière perméable à l'air mais hydrophobe.

L'invention sera mieux comprise à l'aide de la description qui suit, en référence au dessin schématique annexé représentant, à titre d'exemples, quelques formes d'exécution de cette direction à crémaillère pour véhicule automobile.
Figure 1 est une vue partielle, extérieure, d'une direction à crémaillère conforme à l'invention ;
Figure 2 est une vue en coupe suivant II-II de figure 1, passant par la « ligne poussoir » de la direction, et illustrant une première forme de réalisation de l'invention ;
Figure 3 est une vue en coupe du bouchon seul, illustrant une variante de l'invention ;
Figure 4 est une autre vue en coupe du bouchon seul, illustrant une autre variante de l'invention.

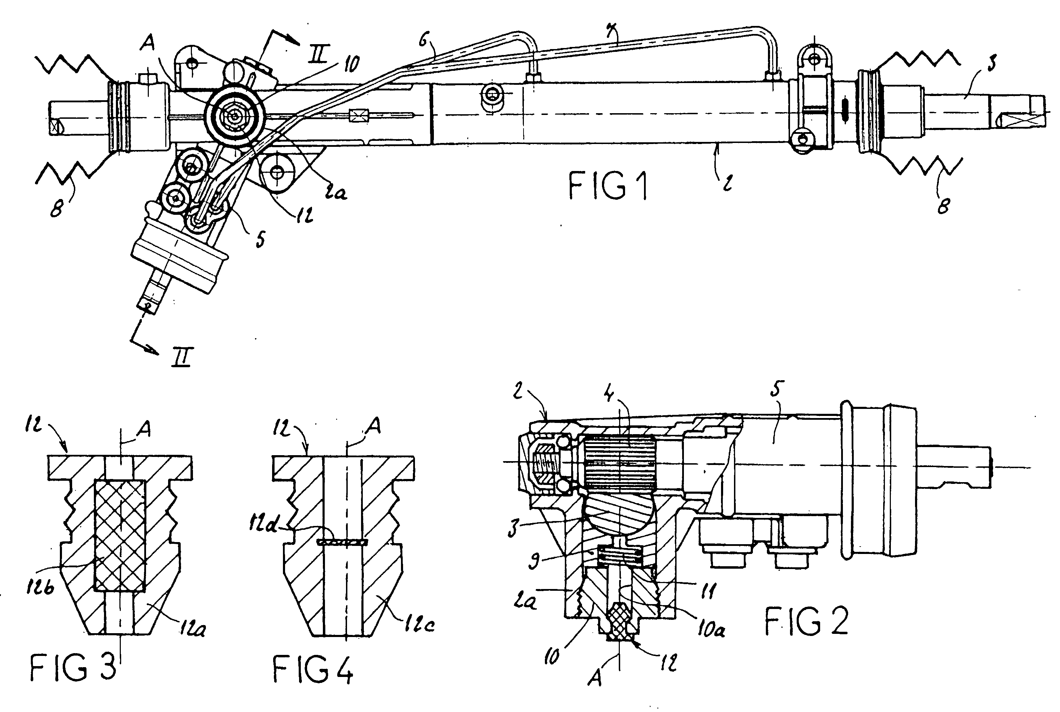

La figure 1 représente extérieurement une direction à crémaillère de véhicule automobile, qui dans l'exemple illustré est une direction assistée hydraulique. Cette figure montre plus particulièrement le carter central tubulaire 2 de la direction assistée, dans lequel est montée coulissante la crémaillère 3. En se référant aussi à la figure 2, la crémaillère 3 est en prise avec un pignon rotatif 4, lié en rotation à la colonne de direction (non représentée) par l'intermédiaire d'une valve d'assistance 5, que des conduits hydrauliques 6 et 7 relient à la partie « vérin » du carter 2.

Les extrémités droite et gauche de la crémaillère 3, extérieures au carter 2, sont accouplées à des biellettes (non représentées). Deux soufflets 8, raccordés respectivement aux deux extrémités du carter 2, recouvrent et protègent les zones d'extrémité de la crémaillère 3.

Le carter de direction 2 possède une partie tubulaire 2a, ouverte vers l'extérieur, dont l'axe central A s'étend orthogonalement aux axes respectifs de la crémaillère 3 et du pignon 4. La partie tubulaire 2a loge les composants de la « ligne poussoir », bien visibles sur la figure 2.

Ces composants comprennent un poussoir proprement dit 9, guidé en coulissement suivant l'axe A dans la partie tubulaire 2a. Le poussoir 9 possède une forme adaptée au profil du dos de la crémaillère 3, et il vient en contact avec cette dernière, éventuellement par l'intermédiaire d'un patin d'appui.

Un élément 10 vissable ou réglable en position est monté derrière le poussoir 9, cet élément 10 étant par exemple vissé dans un taraudage de la partie tubulaire 2a. Un ressort 11, ici réalisé comme un ressort à spires, est interposé entre le poussoir 9 et l'élément par exemple vissable 10, le ressort 11 étant centré sur l'axe A. Ce ressort 11 exerce sur le poussoir 9 un effort axial, que le poussoir 9 transmet à la crémaillère 3 pour l'appuyer contre le pignon 4. Cet effort d'appui est réglable, en vissant plus ou moins profondément l'élément 10 dans la partie tubulaire 2a, ou en bloquant en position cet élément 10 dans la partie tubulaire 2a à la profondeur souhaitée.

L'élément vissable ou réglable 10 possède lui-même un trou central traversant 10a, qui reçoit un petit bouchon 12.

Le bouchon 12 est réalisable en une seule matière, perméable à l'air, mais hydrophobe. Ainsi, le passage de l'air est rendu possible, entre l'intérieur de la direction, notamment l'intérieur du carter 2, d'une part, et l'extérieur, d'autre part. Selon les variations de température, l'air peut donc sortir de la direction ou y rentrer, de manière à équilibrer la pression entre l'intérieur de cette direction et l'extérieur, afin d'éviter la déformation des soufflets 8 et leur détérioration. Le passage de l'eau et de l'humidité vers l'intérieur de la direction est toutefois évité par la matière du bouchon 12.

La figure 3 illustre une première variante de l'invention. Le bouchon 12, prenant place dans le trou central traversant 10a de l'élément vissable ou réglable 10 de la « ligne poussoir », possède ici un corps tubulaire 12a en matière étanche à l'eau et à l'air, par exemple en caoutchouc. Le corps tubulaire 12a reçoit un insert central traversant 12b en matière perméable à l'air mais hydrophobe. L'ensemble est réalisable par surmoulage.

La figure 4 illustre une autre variante de l'invention. Le bouchon 12, prenant place dans le trou central traversant 10a de l'élément vissable ou réglable 10 de la « ligne poussoir », possède ici encore un corps tubulaire 12, en matière étanche à l'eau et à l'air, telle que caoutchouc. Le corps tubulaire 12a reçoit, dans son passage central, une membrane transversale 12d en matière perméable à l'air mais hydrophobe. Là aussi, l'ensemble est réalisable par surmoulage.

La matière perméable à l'air mais hydrophobe, qui selon le cas constitue le bouchon 12 complet, l'insert 12b ou la membrane 12d, peut être notamment une résine polymérique fluorée, telle que celle commercialisée sous la dénomination « PERMEON » (marque enregistrée). Le choix de cette matière, et/ou de la matière constitutive du corps 12a ou 12c du bouchon 12, est aussi fait de manière à permettre le montage aisé et la bonne retenue du bouchon 12 sur l'élément vissable ou réglable 10.

L'on ne s'éloignerait pas du cadre de l'invention, telle que définie dans les revendications annexées, en modifiant les détails du bouchon et des autres composants de la « ligne poussoir », ou en choisissant d'autres matières appropriées, ou encore en destinant le même dispositif à une direction possédant des caractéristiques différentes, qu'il s'agisse d'une direction assistée hydraulique ou électrique, ou d'une direction manuelle.

## Revendications

1. Direction à crémaillère pour véhicule automobile, pourvue d'une « ligne poussoir » assurant un contact permanent de la crémaillère (3) avec le pignon de direction (4), la « ligne poussoir » comprenant, montés dans une partie tubulaire (2a) solidaire du carter de direction (2), un poussoir proprement dit (9) venant en contact avec le dos de la crémaillère (3), un élément (10) vissable ou réglable en position monté derrière le poussoir (9), et des moyens à ressort (11) interposés entre le poussoir (9) et l'élément vissable ou réglable (10), cet élément vissable ou réglable (10) possédant un trou central traversant (10a) recevant un bouchon (12), **caractérisée en ce que** ledit bouchon (12) est réalisé, au moins partiellement, en une matière perméable à l'air, mais hydrophobe, pour permettre l'équilibrage des pressions entre l'intérieur et l'extérieur de la direction, et pour éviter ainsi la déformation des soufflets (8) de cette direction.

2. Direction à crémaillère selon la revendication 1, **caractérisée en ce que** le bouchon (12), reçu dans le trou central traversant (10a) de l'élément vissable ou réglable (10) de la « ligne poussoir », est réalisé entièrement en une matière perméable à l'air, mais hydrophobe.

3. Direction à crémaillère selon la revendication 1, **caractérisée en ce que** le bouchon (12), reçu dans le trou central traversant (10a) de l'élément vissable ou réglable (10) de la « ligne poussoir », possède un corps tubulaire (12a) en matière étanche à l'eau et à l'air, le corps tubulaire (12a) de ce bouchon (12) recevant un insert central traversant (12b) en matière perméable à l'air mais hydrophobe.

4. Direction à crémaillère selon la revendication 1, **caractérisée en ce que** le bouchon (12), reçu dans le trou central traversant (10a) de l'élément vissable ou réglable (10) de la « ligne poussoir », possède un corps tubulaire (12c) en matière étanche à l'eau et à l'air, le corps tubulaire (12c) de ce bouchon (12) recevant, dans son passage central, une membrane transversale (12d) en matière perméable à l'air mais hydrophobe.

## Patentansprüche

1. Zahnstangenlenkung eines Kraftfahrzeugs, welche mit einem Druckmechanismus versehen ist, der einen permanenten Anlagekontakt der Zahnstange (3) mit dem Lenkungsritzel (4) gewährleistet, wobei der Druckmechanismus die folgenden Bauteile aufweist, die in einem mit dem Lenkungsgehäuse (2) integral ausgebildeten, rohrförmigen Bereich (2a) montiert sind: eine eigentliche Druckeinrichtung (9), die an der Rückseite der Zahnstange (3) anliegt, ein hinter der Druckeinrichtung (9) montiertes schraubbares bzw. in seiner Position einstellbares Element (10), und eine zwischen der Druckeinrichtung (9) und dem schraubbaren bzw. einstellbaren Element (10) angeordnete Federeinrichtung (11), wobei das schraubbare bzw. einstellbare Element (10) eine zentrale Durchgangsöffnung (10a) besitzt, die einen Stopfen (12) aufnimmt,
**dadurch gekennzeichnet,**
**daß** der Stopfen (12) zumindest teilweise aus einem luftdurchlässigen, aber wasserabweisenden Material gefertigt ist, um einen Ausgleich zwischen den Drücken innerhalb und außerhalb der Lenkung zu ermöglichen und somit eine Verformung der Faltenbälge (8) der Lenkung zu vermeiden.

2. Zahnstangenlenkung nach Anspruch 1,
**dadurch gekennzeichnet,**
**daß** der in der zentralen Durchgangsöffnung (10a) des schraub- bzw. einstellbaren Elementes (10) des Druckmechanismus aufgenommene Stopfen (12) vollständig aus einem luftdurchlässigen, aber wasserabweisenden Material gefertigt ist.

3. Zahnstangenlenkung nach Anspruch 1,
**dadurch gekennzeichnet,**
**daß** der in der zentralen Durchgangsöffnung (10a) des schraub- bzw. einstellbaren Elementes (10) des Druckmechanismus aufgenommene Stopfen (12) einen rohrförmigen Körper (12a) aus einem wasserdichten und luftdichten Material aufweist, wobei der rohrförmige Körper (12a) dieses Stopfens (12) einen durchgängigen zentralen Einsatz (12b) aus einem luftdurchlässigen, aber wasserabweisenden Material aufnimmt.

4. Zahnstangenlenkung nach Anspruch 1,
**dadurch gekennzeichnet,**
**daß** der in der zentralen Durchgangsöffnung (10a) des schraub- bzw. einstellbaren Elementes (10) des Druckmechanismus aufgenommene Stopfen (12) einen rohrförmigen Körper (12c) aus einem wasserdichte und luftdichten Material aufweist, wobei der rohrförmige Körper (12c) dieses Stopfens (12) in seiner Mittelpassage eine querliegende Membran (12d) aus einem luftdurchlässigen, aber wasserabweisenden Material aufnimmt.

## Claims

1. A rack and pinion steering system for an automobile vehicle, provided with a "pusher line" which ensures permanent contact of the rack (3) with the steering pinion (4), said "pusher line" comprising, mounted in a tubular part (2a) which is integral with the steering housing (2), what is strictly termed a pusher (9) which comes into contact with the back of the rack (3), an element (10) which can be screwed in or out or the position of which can be adjusted and which is mounted behind the pusher (9), and spring means (11) interposed between the pusher (9) and the element (10) which can be screwed in or out or adjusted, said element (10) which can be screwed in or out or adjusted having a central through hole (10a) which receives a plug (12), **characterised in that** said plug (12) is made, at least in part, of a material which is permeable to air but which is hydrophobic, in order to permit equilibration of pressure between the inside and the outside of the steering system and thus to prevent deformation of the bellows (8) of said steering system.

2. A rack and pinion steering system according to claim 1, **characterised in that** the plug (12) which is received in the central through hole (10a) of the element (10) of the "pusher line" which can be screwed in or out or adjusted is made entirely of a material which is permeable to air but which is hydrophobic.

3. A rack and pinion steering system according to claim 1, **characterised in that** the plug (12) which is received in the central through hole (10a) of the element (10) of the "pusher line" which can be screwed in or out or adjusted has a tubular body (12a) made of a material which is impermeable to water and air, the tubular body (12a) of said plug (12) receiving a central insert (12b) which passes through it and which is made of a material which is permeable to air but which is hydrophobic.

4. A rack and pinion steering system according to claim 1, **characterised in that** the plug (12) which is received in the central through hole (10a) of the element (10) of the "pusher line" which can be screwed in or out or adjusted has a tubular body (12c) made of a material which is impermeable to water and air, the tubular body (12c) of said plug (12) receiving, in its central passage, a transverse diaphragm (12d) made of a material which is permeable to air but which is hydrophobic.
